Europäisches Patentamt

(19) European Patent Office

Office européen des brevets

(11) Publication number: **0 369 920**
**A2**

## (12) EUROPEAN PATENT APPLICATION

(21) Application number: 89480164.6

(51) Int. Cl.⁵: $G06F\ 5/06$

(22) Date of filing: 10.10.89

(30) Priority: 18.11.88 US 273789

(43) Date of publication of application:
23.05.90 Bulletin 90/21

(84) Designated Contracting States:
DE FR GB

(71) Applicant: **International Business Machines**
**Corporation**
**Old Orchard Road**
**Armonk, N.Y. 10504(US)**

(72) Inventor: **Tai-Nin Lai, Daniel**
**674 Parma Way**
**Los Altos, CA 94022(US)**
Inventor: **Locke, Michael Eugene**
**678 Bancroft Street**
**Santa Clara, CA 95051(US)**

(74) Representative: **Vekemans, André**
**Compagnie IBM France Département de**
**Propriété Intellectuelle**
**F-06610 La Gaude(FR)**

(54) **Interleaving circular buffers.**

(57) Method and apparatus for managing a plurality of circular buffers are disclosed. The method subdivides a contiguous block of storage into a plurality of interleaved, circular buffers. The storage area is divided into N, M length circular buffers that are interleaved. The interleaving technique starts each of the M buffers at address I-1, where I is the buffer number (1,2,3,4).

Additional subdivisions of an allocated circular buffer of length N are formed by evenly dividing an existing circular buffer into K additional buffers of length L (note that $K * L = M$). For example, 2 additional buffers of length 2 are allocated from the above sixteen byte memory starting with the first K elements of one of the four byte original circular buffers. The increment to get to the next element in each buffer is $K * M$. The address of the Qth element of the buffer is $Q * K * M + A(i)$, where $A(i)$ is the starting address of the buffer that is being subdivided.

EP 0 369 920 A2

## INTERLEAVING CIRCULAR BUFFERS

This invention generally relates to a memory addressing technique and more particularly to a method of efficiently, interleaving circular buffers within a contiguous block of memory.

In modern data processing, telephony and control systems, the data processing operations are carried out by one or more data processors, each consisting of a central processing unit and memory. The central processing unit, under the control of a program stored in the memory of data processor, manipulates data, also stored in memory. Data is entered into and taken out of memory via communications links attached to phones, terminals and other input/output (I/O) units.

Data processing, telephony and control systems frequently carry out many tasks or program processes concurrently. Each of these tasks is accomplished by carrying out one or more programs. Circular buffers are commonly used to coordinate the execution of programs and exchange information between programs. The program processes that initiate program execution often place control information into a circular buffer in the memory of the telephony system. The system then processes the control information in the order that it was placed into the buffer.

Some programs require multiple circular buffers to store diverse sets of information for program execution. Programs that process information coming into a processor from a plurality of communication links often require circular buffers to store the information as it arrives. The information is removed from the circular buffers in a sequential manner so that the central processing unit can perform data processing functions such as removal of control characters or data compression and store the information in memory for future use.

Microprocessors, such as the Intel 8086 central processing unit address information in blocks of a power of two more efficiently than other sizes of information. In applications such as digital signal processing, it is important to minimize the amount of processing time associated with controlling a plurality of circular queues to assure the timely processing of information arriving on the communication link.

The prior art discloses examples of circular queuing like that shown in U.S. Patent No. 4,292,470. This patent teaches an audio signal recognition computer that employs queuing means for implementing sequential, circular, non-interleaved queues. The queues are variable length and do not reside in a contiguous block of storage. Each of the queues have unique addressing information that requires setup operations before the queue can be used.

IBM TDB vol. 20, No. 2, July 1972, pp. 871-80 discusses another example of circular queuing apparatus that is designed to accommodate a single circular queue.

IBM TDB vol. 26, No. 1, June 1983, pp. 86-8 discloses a circular buffering technique that accommodates variable length data.

While the prior art considers sophisticated methods for implementing circular queues, the prior art does not provide a means for dividing a contiguous block of storage up into a plurality of variable length, interleaved, circular buffers that can be efficiently addressed with standard data processing means.

It is therefore an object of this invention to provide a method for subdividing a contiguous block of storage into a plurality of interleaved, circular buffers.

It is another object of this invention to exploit the addressing capabilities of typical microprocessors to efficiently implement interleaved, circular buffers.

According to the invention, these objects are accomplished by assigning a contiguous block of storage to act as a data storage area for a plurality of variable length, circular buffers. This data storage area is divided into N, M length circular buffers that are interleaved. The interleaving technique starts each of the M buffers at address I-1, where I is the buffer number (1,2,3,4). For a sixteen byte area, starting address = 0, with four buffers this means that the four circular buffers would have starting addresses 0, 1, 2, and 3. The next address in one of the circular buffers would be calculated by adding M (the number of buffers) to the previous address.

Additional subdivisions of an allocated circular buffer of length N are formed by evenly dividing an existing circular buffer into K additional buffers of length L (note that $K * L = M$). For example, 2 additional buffers of length 2 are allocated from the above sixteen byte memory starting with the first K elements of one of the four byte original circular buffers. The increment to get to the next element in each buffer is $K * M$. The address of the Qth element of the buffer is $Q * K * M + A(i)$, where $A(i)$ is the starting address of the buffer that is being subdivided.

For example, starting with the first circular buffer at address 0, we can assign the first two addresses of the interleaved circular buffer (0 & 4) as the starting addresses of each of the additionally subdivided, circular buffers and elements within the circular buffers are accessible using $K * M$ (8) increments.

The foregoing and other objects, aspects and advantages of the invention will be better understood from the following detailed description of the preferred embodiment of the invention with reference to the accompanying drawings, in which:

Figure 1 is an illustration of the hardware environment in accordance with the present invention;

Figure 2 is an illustration of a circular buffer in accordance with the present invention;

Figure 3 is an illustration of an additionally divided circular buffer in accordance with the present invention; and

Figure 4 is a block diagram of hardware and software in accordance with the present invention.

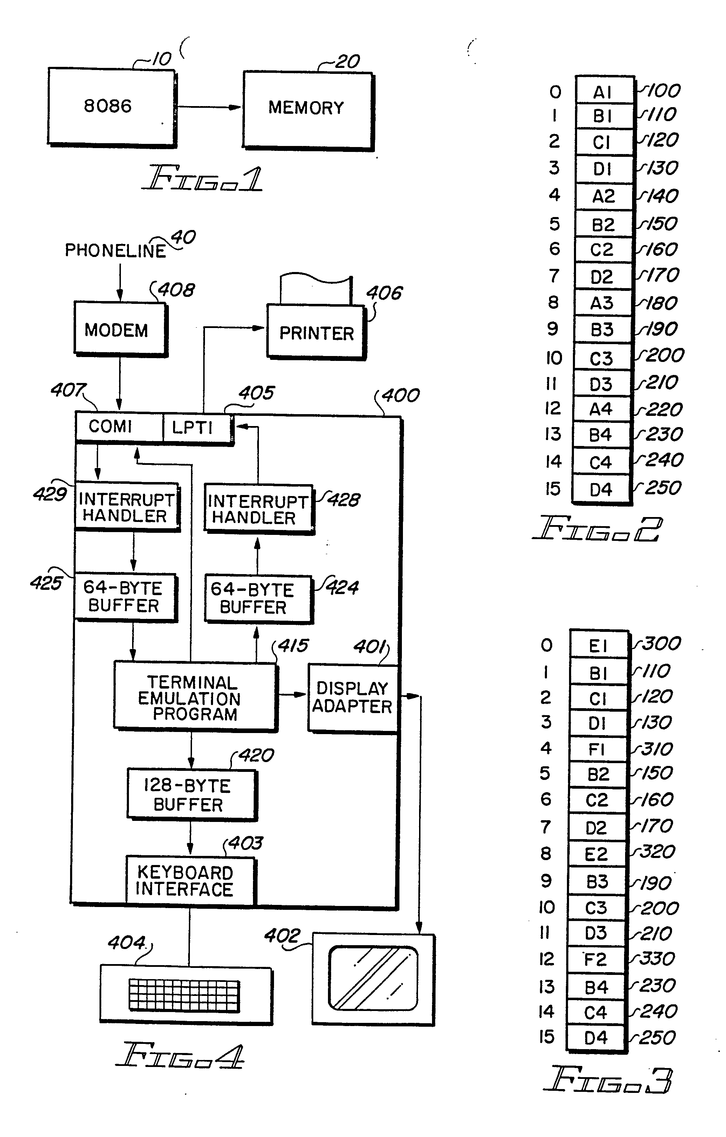

Referring now to the figures, and more particularly to Figure 1, a block diagram is provided to convey the general hardware environment. An 8086 central processing unit 10 employs an attached memory 20 to carry out data processing operations. A description of the processor architecture, memory, input/output capabilities, multiprocessing features, process control and monitoring capabilities, instruction set, addressing modes, programming facilities and programming guidelines are provided in a detailed discussion in chapter 2 of the iAPX 86, 88 User's Manual, Intel, August 1981, pp. 2-1 to 2-100.

The description of the general registers on page 2-6 describes the capability of the separate addressing capabilities for the high and low order bytes of the registers. This means that each data register can be used interchangeably as two eight-bit registers or as a single sixteen bit register. The interchangeability of the registers is a common feature that is available on many microprocessors.

Because most processors use an M bit register to address a contiguous memory, they are capable of addressing a 2M byte circular buffer efficiently. For example, an 8 bit register can efficiently address, 28 (256) bytes of information and a 16 bit register can address 216 (65,536) bytes of information efficiently.

This invention subdivides a circular memory of optimal proportions for addressing efficiency into a plurality of variable length, interleaved, circular buffers and improves memory access speed.

Referring to Figure 2, a 16 byte memory is shown as an example of a circular buffer in accordance with the inven tion. The initial sixteen byte area is divided into four, four byte circular buffers, A 100, 140, 180, and 220; B 110, 150, 190, and 230; C 120, 160, 200, and 240; and D 130, 170, 210, and 250. The circular buffers are interleaved in the contiguous sixteen byte area. For example, A's four data storage locations are located at address 0, 4, 8 and 12.

The next storage location is accessed by adding the number of buffers (four) to the previous location, unless the location is beyond the address area, then the first location is used. This addressing scheme is extremely efficient using the instruction set of the 8086 processor and a memory area of 256 or 65536 bytes.

To further subdivide the initial circular buffers into two additional smaller circular buffers, the first circular buffer A 100, 140, 180, and 220 are reassigned in Figure 3 as E 300 and 320, and F 310 and 330. The new additional circular buffers are interleaved within the existing circular buffers.

The circular buffers are created by assigning a contiguous block of storage to act as a data storage area for a plurality of variable length, circular buffers. This data storage area is divided into N, M length circular buffers that are interleaved. The interleaving technique starts each of the M buffers at address I-1, where I is the particular buffer number (1, 2, 3, 4). Referring to Figure 2, this location is shown at label 100 address zero. For a sixteen byte area, starting address = 0, with four buffers this means that the four circular buffers would have starting addresses 0, 1, 2, and 3 or labels 100, 110, 120, and 130. The next address in one of the circular buffers would be calculated by adding M (the number of buffers) to the previous address.

To form additional subdivisions of an allocated circular buffer of length N, must be evenly divided into K additional buffers of length L. For example, if K = 2 the additional buffers of length = 2 are allocated starting with the first K elements of the original circular buffer as shown in Figure 3. The address of the next element in each buffer is NEXTADDRESS = $(K * M + A(i))$, where A(i) is the starting address of the buffer that is being subdivided. In our example, E1 300 of Figure 3 is the starting address at zero. E2 320 is located at address 8 $(K * M + A(i); 2 * 4 + 0)$.

The initial contiguous block of storage could be increased to allow additional interleaved circular buffers employing the same formula.

A more detailed description of a software implementation using the 8086 processor is provided below.

Circular Buffer Logic

Referring now to Figure 4, a block diagram of a personal computer 400 with a display adapter 401 for controlling attached display 402, keyboard interface 403 for controlling attached keyboard 404, and communication ports LPT1 : 405 and COM1: 407, for attaching a printer 406 and modem 408. The modem 408 is used to communicate via attached phoneline 410 to a host processor. Terminal emulation program 415 resides in the personal computer 400 to enable communication through the modem 408 to host processor via a predefined protocol.

The terminal emulation program makes use of three circular buffers to control inputs from the keyboard 420, the communication port 425 and the printer port 424. Two interrupt handlers are also resident in the personal computer 400 for controlling information transfer in real time from the communication port 429 and the printer port 428.

As information arrives at the communication port 407, the communication interrupt handler 429 responds to a communication interrupt and moves the information into circular buffer 425 for processing by the terminal emulation program 415. When the terminal emulation program 400 is required to print information, the information is sent to the circular buffer 424 for transfer via the printer interrupt handler 428 to the printer port 405 for printing on the attached printer 406. Thus a user can periodically send the information shown on the display from the display adapter 401 through the terminal emulation program 415 to the printer 406.

In a similar process, the keyboard buffer 420 can be used to store keystrokes for later processing by the terminal emulation program 415. As with the communication port information it is important to guarantee that all of the information is stored for later processing since the information flow cannot be halted to allow partial processing of the information without losing some of the data. Similarly, the print buffering assures that the printer always has any available data ready for processing immediately, thus improving the efficiency of print operations.

The communication and printing operations described above rely on a variety of circular buffers. Method for implementing the buffers is required to assure proper functioning and an efficient method for carrying out the processing of the circular buffers improves system performance and increases throughput of information. Our invention is a uniquely tailored method that makes efficient use of storage and processor power to implement circular buffers of various sizes.

Attached is a source code listing of commented assembly language 8086 instructions. The code is callable from any high level language to store, retrieve and maintain a plurality of circular buffers on a personal computer. A PASCAL source code listing is also provided to illustrate how a high level program can use the assembly language code to manipulate circular buffers and implement the application discussed above.

In our example, the assembler code to create two buffers of length 64 bytes for a communication buffer 425 and a printer buffer 424 in Figure 4. A single keyboard buffer 420 is also created for processing the keyboard entries. Each of the buffers are managed independently, although the information is stored in an interleaved fashion as described above. The interleaving of the information improves addressing and allows a contiguous block of storage to be partitioned into multiple circular buffers in a manner that optimizes processing.

4

Pascal Source Listing

```
PROGRAM Circle(INPUT, OUTPUT);
 TYPE     Allstrings = LString(128);
 VAR      ThisString : Allstrings;
          Erc,Erc2 : Word;
          Command : Char;
          BuffNum : INTEGER;
 FUNCTION StoreString(BuffNum:WORD;
     VARS YourString:AllStrings):WORD;
EXTERN;
FUNCTION GetString(BuffNum:WORD;
     VARS MyString:AllStrings);WORD;
EXTERN;
BEGIN
  REPEAT
  BEGIN
    WRITE('Enter s to store a string.
           r to recall a string,
           q to quit : ');
    READLN(Command);
    CASE Command of 's','S' :BEGIN
      WRITELN('Enter the buffer
               number (0,1,2) and the
               string');
      READLN(BuffNum,ThisString);
      Erc := StoreString(BuffNum, ThisString);
      IF Erc <> 0 THEN
         WRITELN('Error code = ',Erc:5);
```

```
          END;
          'R','r' : BEGIN
            WRITELN('Enter the buffer number (0,1,2)');
            READLN(BuffNum);
            Erc :=GetString(BuffNum, ThisString);
            IF Erc <> 0 THEN
               WRITELN('Error code = 'Erc:5)
               ELSE WRITELN(ThisSrting);
            END;
          'Q','q' : ;
            OTHERWISE WRITELN('Invalid command');
          END;
        END UNTIL (Command='q') or (Command='Q');
      END.
```

                    Assembler Source Listing


```
PUBLIC StoreString         ;routine entry for storing
                           ;character strings
PUBLIC Getstring           ;Routine entry for
                           ;retrieving above


Data SEGMENT WORD PUBLIC 'Data'
;**********************************************
;Data allocation is the key part of this invention
;Unfortunately, the assembler does not have
;facilities for automatically
;allocating the buffers the way we want.
;Because of this the areas must be "hand allocated"
;and explicitly declared.
;**********************************************
;The objective is to form 3 buffers of lengths 128,
;64 and 64.  These buffers will be used to store
;multiple character strings.  We will need a 256
;byte data area.  Because the 8086 allows us to add
;an arbitrary offset, we will simplify this example
```

```
;and use arbitrary memory alignment.
;**********************************************
;In a real time critical application, performance
;could be improved by aligning the data on a 256
;byte boundary.  Then it is not necessary to add
;an offset, and the code will execute faster.
;**********************************************
CirBuff DB     256 DUP (0)


;Space for the buffer
;**********************************************
;Now we must declare the starting point of each
;buffer and the increment from buffer to buffer.
;Following the functional description, we have 2
;buffers of length 128.  The second buffer is
;subdivided into 2 buffer of length 64.  The
;128 byte buffer starts with offset 1 (start of
;the second, original 128 byte buffer allocated.
;The second length 64 buffer starts with the second
;element of second 128 byte buffer, or offset 1+2 =
;3.
;**********************************************
;Addition of the offset of the actual buffer
;address will be done at execution time.
;**********************************************
;*
Buff1Start EQU 0
Buff2Start EQU 1
Buff3Start EQU 3
;**********************************************
;The increment from byte to byte within each buffer
;for a 128 byte buffer is equal to 2, for 64 byte
;buffer is equal to 4.


;**********************************************
Buff1Inc  DB 2
Buff2Inc  DB 4
```

```
Buff3Inc   DB 4
MaxLen     DW 128
           DW 64
           DW 64
;************************************************
;Table used to detect overflow conditions
;************************************************
ShiftCnt   DW 1
           DW 2
           DW 2
;************************************************
;Now we need input and output pointers.  These
;pointers are used to remember where the data starts
;and stops within the buffers.
;************************************************
;StartPtr is where to start getting inserting data
;EndPtr is the end to get data from
;************************************************
Buff1StartPtr DB Buff1Start
Buff2StartPtr DB Buff2Start
Buff3StartPtr DB Buff3Start
Buff1EndPtr   DB Buff1Start
Buff2EndPtr   DB Buff2Start
Buff3EndPtr   DB Buff3Start
;************************************************
;Now we will declare some error codes, just for
;safety's sake.
;************************************************
NoError    EQU   0
OverFlowE  EQU   1
;************************************************
;Overflow or pointers messed up.  Pointers reset
;************************************************
NullString EQU   2
;************************************************
;No characters in string.
;Each string consists of a byte count, followed by
```

8

```
;that number of arbitrary characters.
;****************************************************
Data ENDS
DGROUP DATA
Main SEGMENT WORD PUBLIC 'Code'
        ASSUME CS: Main
        ASSUME DS: DGROUP
StoreString PROC FAR
        PUSH        BP
        MOV         BP,SP
        LES         SI,DWORD PTR [BP+6]
;****************************************************
;This is a parameter put on the stack by the
;Pascal call.  It is a 32 bit memory pointer to
;the character string
;****************************************************
        MOV         DI,WORD PTR [BP+10]
;****************************************************
;This is another Pascal parameter.  It is the
;buffer number to use
;****************************************************
        MOV         CL,BYTE PTR ES:[SI]
;****************************************************
;Load CL with byte count
;****************************************************
        OR          CL,CL
        JZ          NoString
;****************************************************
;0 length string, return error
;****************************************************
        XOR         CH,CH
;****************************************************
;Setup length counter
;****************************************************
        INC         CX
;****************************************************
;There is 1 more byte to move than the length
```

```
;indicates because the length indicator is also
;stored
;*******************************************
        MOV        BL,[DI] [Buff1StartPtr]
        MOV        AL,[DI] [Buff1EndPtr]
;**********************************************
;setup data ptrs
;**********************************************
        SUB        AL,BL
;**********************************************
;compare string length to available space
;**********************************************
        JNE        St1
;**********************************************
;Buffer is empty, MAXLen locations available
;**********************************************
        MOV        AX, [DI] [MAXLen]
        JMP        St2
        XOR        AH,AH
;**********************************************
;convert to  16 bits
;**********************************************
        MOV        DX,CX
;**********************************************
;save the calculated count
;**********************************************
        MOV        CX,[DI] [ShiftCnt]
;**********************************************
;find out how much to shift by to make input
;byte count comparable to pointer difference
;**********************************************
        SHR        AX,CL
;**********************************************
;adjust pointers to be comparable to input byte
;count
;**********************************************
        MOV        CX,DX
```

```
        SUB        AX,CX
;*********************************************
;This number represents the number of available
;locations that will be left after the move is
;complete.
;*********************************************
;There must be at least one location or we
;won't be able to tell the difference between
;full and empty.
;*********************************************
        JLE        OverFlow
        XOR        BH,BH
;*********************************************
;extend the pointer to 16 bits, as required by
;the 8086 architecture.  Only the least
;significant 8 bits will be modified.  If the
;buffer had been aligned properly, we could ;have moved
the 8 most significant address bits
;into BH here, and avoided the immediate
;address offset used later.
;*********************************************
        MOV        AH,[DI] [Buff1Inc]
;*********************************************
;get the byte to byte increment amount.
;*********************************************
;This is the time critical loop.  the above
;instructions are just setup overhead.  This loop is
;the run time part of this invention to store and
;retrieve information.
;*********************************************
PutL: LODS        BYTE PTR ES:[SI]
;*********************************************
;Get a string character
        MOV        [ BX][ CirBuff],AL
;*********************************************
;Store the information
;*********************************************
```

11

```
        ADD             BL,AH
;************************************************
;Circular buffer pointer update.  Use amounts
;from lookup table
;************************************************
        LOOP            PutL
        MOV             [DI][BufflStartPtr],BL
;************************************************
;save the final pointer
;************************************************
        XOR             AX,AX
;************************************************
;0 error code
;************************************************
        POP             BP
        RET             6
;************************************************
OverFlow: MOV    AX,OverFlowE
;************************************************
;No need to fix pointers, nothing is wrong
;************************************************
        POP             BP
        RET             6 NoString: MOV    AX,NullString
        POP             BP
        RET             6 StoreString ENDP
;************************************************
;This space was intentionally left blank
;to enhance readability of the code
;************************************************
GetString PROC FAR
        PUSH            BP
        MOV             BP,SP
        LES             DI,DWORD PTR [BP+6]
;************************************************
;This is a parameter put on the stack by the
;Pascal call.  It is a 32 bit memory pointer to
```

```
;the character string
;***********************************************
        MOV         SI,WORD PTR[ BP+10]
;***********************************************
;This is another Pascal parameter.  It is the
;buffer number to use.
;***********************************************
        MOV         AL,[SI][Buff1StartPtr]
        MOV         BL,[SI][Buff1EndPtr]
;***********************************************
;setup data pointers
;***********************************************
        XOR         BH,BH
;***********************************************
;Extend the pointer to 16 bits, as required by
;the 8086 architecture.  Only the least
;significant 8 bits will be modified.  If the
;buffer had been aligned properly, we could
;have moved the 8 most significant address bits
;into BH here, and avoided the immediate
;address offset used later.
;***********************************************
        MOV         CL,BYTE PTR [BX][CirBuff]
;***********************************************
;Load CL with byte count
;***********************************************
        OR          CL,CL
        JZ          NoString
;***********************************************
;0 length string, return error
;***********************************************
        XOR         CH,CH
;***********************************************
;Setup length counter
;***********************************************
```

```
      INC          CX
;**********************************************
;There is 1 more byte to move than the length
;indicates because the length indicator is also
;stored
;**********************************************
      SUB          AL,BL
;**********************************************
;Compare string length to available space
;Equal pointers means 0 bytes available, no need to
;adjust calculation.
      XOR          AH,AH
;**********************************************
;Convert to 16 bits
;**********************************************
      MOV          DX,CX
;**********************************************
;save data count
;**********************************************
      MOV          CX,[SI][ShiftCnt]
;**********************************************
;shift per table
;**********************************************
      SHR          AX,CL
;**********************************************
;Set pointer difference equal to total bytes
;**********************************************
      MOV          CX,DX
;**********************************************
;Restore data count
;**********************************************
      SUB          AX,CX
;**********************************************
;This number represents the number of available
;locations that will be left after the move is
;complete.
;**********************************************
```

```
        JL          OverFlow
        MOV         AH,[SI] [Buff1Inc]
;************************************************
;Get byte to byte update amount
;************************************************
;This is the time critical loop.  the above
;instructions are just setup overhead.  This loop is
;the run time part of this invention.
;************************************************
GetL: MOV         AL,[BX] [CirBuff]
;************************************************
;Get a string character
;************************************************
        STOS        BYTE PTR ES:[DI]
;************************************************
;Save the character
;************************************************
        ADD         BL,AH
;************************************************
;Circular buffer pointer update
;************************************************
        LOOP        GetL
        MOV         [SI] [Buff1EndPtr],BL
;************************************************
;Save the final pointer
;************************************************
        XOR         AX,AX
;************************************************
;0 error code
;************************************************
        POP         BP
        RET         6 GetString ENDP Main ENDS
        END
;************************************************
```

Claims

1. Method for managing a plurality of circular buffers in a memory under the control of a processor, comprising the steps of:

(a) storing starting address of the circular buffers;

(b) calculating table of increments for each of the plurality of circular buffers such that information is stored in an interleaved manner;

(c) allocating a table of pointers indicative of addresses in each of the plurality of circular buffers; and

(d) utilizing the table of pointers to store and retrieve information in the plurality of circular buffers.

2. Method for managing a plurality of circular buffers as recited in claim 1, further comprising the step of segmenting an original circular buffer into a plurality of smaller, interleaved circular buffers.

3. Method for managing a plurality of circular buffers as recited in claim 1 or 2, wherein the circular buffer memory size is allocated to optimize memory access speed.

4. Method for managing a plurality of circular buffers as recited in any one of claims 1-3, wherein the table of increments is calculated by multiplying the number of circular buffers by the length of each circular buffer.

5. Method for managing a plurality of circular buffers as recited in any one of claims 1-4, wherein the table of pointers are stored in ascending order to correlate with each of the circular buffers.

6. Method for managing a plurality of circular buffers as recited in claim 5, wherein the table of pointers include a starting pointer and an ending pointer for each of the circular buffers.

7. Method for managing a plurality of circular buffers as recited in claims 5 or 6, wherein the table of pointers include an overflow entry indicative of a pointer malfunction.

8. Method for managing a plurality of circular buffers as recited in claim 1, wherein the next location in a circular buffer is calculated in one machine instruction.

9. Apparatus for managing a plurality of circular buffers in a memory under the control of a processor, comprising

(a) means for storing starting address of the circular buffers;

(b) means for calculating table of increments for each of the plurality of circular buffers such that information is stored in an interleaved manner;

(c) means for allocating a table of pointers indicative of addresses in each of the plurality of circular buffers; and

d) means for utilizing the table of pointers to store and retrieve information in the plurality of circular buffers.

10. Apparatus for managing a plurality of circular buffers as recited in claim 9, further comprising means for segmenting an original circular buffer into a plurality of smaller, interleaved circular buffers.

11. Apparatus for managing a plurality of circular buffers as recited in claim 9 or 10, wherein the circular buffer memory size is allocated to optimize memory access speed.

12. Apparatus for managing a plurality of circular buffers as recited in any one of claims 9-11, wherein the table of increments is calculated by multiplying the number of circular buffers by the length of each circular buffer.

13. Apparatus for managing a plurality of circular buffers as recited in any one of claims 9-12, wherein the table of pointers are stored in ascending order to correlate with each of the circular buffers.

14. Apparatus for managing a plurality of circular buffers as recited in claim 13, wherein the table of pointers include a starting pointer and an ending pointer for each of the circular buffers.

15. Apparatus for managing a plurality of circular buffers as recited in claim 3 or 14, wherein the table of pointers include an overflow entry indicative of a pointer malfunction.

16. Apparatus for managing a plurality of circular buffers as recited in any one of claims 9-15, wherein the next location in a circular buffer is calculated in one machine instruction.

FIG.1

8086 → MEMORY

10, 20

FIG.2

| 0 | A1 | 100 |
| 1 | B1 | 110 |
| 2 | C1 | 120 |
| 3 | D1 | 130 |
| 4 | A2 | 140 |
| 5 | B2 | 150 |
| 6 | C2 | 160 |
| 7 | D2 | 170 |
| 8 | A3 | 180 |
| 9 | B3 | 190 |
| 10 | C3 | 200 |
| 11 | D3 | 210 |
| 12 | A4 | 220 |
| 13 | B4 | 230 |
| 14 | C4 | 240 |
| 15 | D4 | 250 |

FIG.3

| 0 | E1 | 300 |
| 1 | B1 | 110 |
| 2 | C1 | 120 |
| 3 | D1 | 130 |
| 4 | F1 | 310 |
| 5 | B2 | 150 |
| 6 | C2 | 160 |
| 7 | D2 | 170 |
| 8 | E2 | 320 |
| 9 | B3 | 190 |
| 10 | C3 | 200 |
| 11 | D3 | 210 |
| 12 | F2 | 330 |
| 13 | B4 | 230 |
| 14 | C4 | 240 |
| 15 | D4 | 250 |

FIG.4

PHONELINE 40

MODEM 408

PRINTER 406

COMI 407    LPTI 405    400

INTERRUPT HANDLER 429    INTERRUPT HANDLER 428

64-BYTE BUFFER 425    64-BYTE BUFFER 424

TERMINAL EMULATION PROGRAM 415    DISPLAY ADAPTER 401

128-BYTE BUFFER 420

KEYBOARD INTERFACE 403

404    402